# FASCICULE DE BREVET EUROPEEN

(11) **EP 1 480 434 B1**
(45) Date de publication et mention de la délivrance du brevet: **21.05.2008**
(21) Numéro de dépôt: 03078766.7
(22) Date de dépôt: 28.11.2003
(51) Int. Cl.: H04M 19/00

(54) **Dispositif de transmission d'énergie électrique dans un système de télécommunications par fils**
Verfahren und Vorrichtung zur Energieübertragung in einem drahtgebundenen Telekommunikationssystem
Method and device for transmission of electrical energy in a wired telecommunication system

(30) Priorité: 21.05.2003 EP 03391001
(43) Date de publication de la demande: 24.11.2004
(73) Titulaire: CE + T International, 9911 Troisvierges (LU)
(72) Inventeur: Frebel, Fabrice, 4020 Wandre (BE); Paque, Michel, 4130 Esneux (BE); Bleus, Paul, 4020 Jupille (BE)
(74) Mandataire: Gevers, François

(56) Documents cités:
- EP-A- 0 696 831
- US-A- 4 426 587
- US-A- 4 560 835

## Description

La présente invention concerne un dispositif de transmission d'énergie dans un système de télécommunications par fils, le système comprenant des première et deuxième paires de fils (TP) de télécommunication. Un tel dispositif comprend typiquement un central ou poste de base agencé à être relié à une source d'énergie électrique et pour y connecter les première et deuxième paires de fils. Le satellite ou poste auxiliaire comprend un premier convertisseur satellite. Ce premier convertisseur satellite comprend une première entrée agencée à y connecter la première paire de fils.

Etant donné l'évolution des réseaux de télécommunications et la nécessité d'ajouter ou de prévoir dans les satellites des dispositifs comme des démultiplexeurs pour fibres optiques, il faut équiper à cet effet ces satellites en alimentations en énergie.

Plutôt que de prévoir pour un ou chacun ou certains des satellites une alimentation en énergie distincte à partir d'un réseau électrique plus ou moins proche, et donc de devoir y installer chaque fois notamment un compteur d'énergie, un redresseur, des batteries à y entretenir, une ventilation, etc. , on préfère pouvoir recevoir l'énergie nécessaire à partir de la source d'énergie disponible au central, ceci réduisant favorablement dans les satellites le matériel à y mettre en oeuvre, donc aussi l'installation et l'entretien dudit matériel ainsi que le type de réceptacle pour celui-ci à l'endroit du satellite.

Il est déjà connu de faire coexister dans un même câble entre central et satellite des paires de fils torsadées utilisées à des fins différentes, principalement
- pour des signaux analogiques dans la bande passante de 300 à 3400 Hz avec des très basses tensions (TBT : soit < 60 Vdc),
- pour transporter des données dans la bande de 25 kHz à quelques MHz, utilisant des très basses tensions (TBT : soit < 60Vdc),
- pour transporter de l'énergie de manière sécurisée avec des tensions supérieures à 60 Vdc, notamment jusqu'à 400 Vdc (typiquement 320 Vdc mais avec des courants de défaut très faibles (< 25 mA dans tous les cas).

Un système d'alimentation à distance est illustré à la page 289 du document "No Power, No Service, No Revenue", publiée à l'occasion de la conférence Intelec du 14-18 octobre 2001 (Conference Publication No. 484). Suivant ce principe, le central comprend un convertisseur reliée à la source d'énergie, d'une part, et à des limitateurs de puissance ou de courant. Chacun de ces limitateurs est relié à une paire de fils respective. Du côté satellite, chaque paire de fils est reliée à un convertisseur satellite. En d'autres termes, ce document présente un système d'alimentation à distance en utilisant le principe d'indépendances des paires de fils.

Par rapport à un système d'alimentation local en énergie classique, un tel système permet de réduire le coût d'entretien du dispositif d'alimentation et offre un contrôle centralisé de l'alimentation d'énergie. Un inconvénient toutefois de ce système connu est qu'il comporte encore un grand nombre de matériel, ce qui nuit au rendement du système. En particulier, il est prévu que pour chaque paire de fils, on prévoit un convertisseur satellite.

Un objectif de la présente invention est de prévoir un système d'alimentation d'énergie à distance ayant un rendement plus élevé, tout en réduisant davantage les coûts d'entretien, et le cas échéant, de l'installation.

Pour atteindre ce but, le dispositif suivant l'invention est caractérisé en ce que le premier convertisseur satellite comprend une deuxième entrée agencée à y connecter la deuxième paire de fils. En prévoyant que plusieurs paires de fils sont reliés au même convertisseur satellite, on peut donc obtenir un système de dépendances de paires comprenant une série de groupes de paires de fils, chaque groupe de paires de fils étant relié à un même convertisseur satellite. Le nombre de convertisseurs satellites est considérablement réduit, ce qui facilite l'entretien. Dans un cas particulier comprenant 48 paires de fils, on peut par exemple prévoir 16 convertisseurs satellites qui sont chacun reliés à trois paires de fils. La technologie actuelle permet de prévoir jusqu'à une dizaine de paires de fils sur un même convertisseur.

Dans une première forme de réalisation préférentielle du dispositif de transmission d'énergie dans un système de télécommunications par fils, le système comprenant en outre des troisième et quatrième paires de fils de télécommunication, le satellite comprend un deuxième convertisseur satellite agencé à y connecter les troisième et quatrième paires de fils. Le central est agencé à y connecter les troisième et quatrième paires de fils. Ce même central est en outre agencé à produire un premier signal et transmettre ce premier signal aux première et deuxième paires de fils, et à produire un deuxième signal différent du premier signal et transmettre ce deuxième signal au troisième et quatrième paires de fils. Suivant ce dispositif, un signal distinctif est ainsi généré pour chaque groupe de paires, ce qui facilite l'utilisateur final de déterminer facilement à quel groupe chaque paire de fils appartient. En d'autres termes, des moyens d'identification des paires de fils sont prévu. Avantageusement, ceci est réalisé en émettant des signaux de basse fréquence, typiquement entre 3 et 300 Hz, bande non utilisée en télécommunication.

Pour ne pas devoir se soucier des problèmes de polarités, le convertisseur satellite comprend de préférence, des ponts de diode. Chaque pont de diode comprend une entrée non polarisée reliée une des entrées du convertisseur satellite et une sortie polarisée. Les sorties polarisées sont reliées l'une à l'autre et sont agencées à fournir l'énergie à l'étage d'entrée du convertisseur satellite.

La sécurité du dispositif suivant l'invention est accrue lorsqu'il est prévu des moyens de mesure d'impédance agencés à mesurer l'impédance d'entrée du convertisseur satellite et des moyens de commande reliés au moyens de mesure et agencés à provoquer une coupure de l'alimentation des paires de fils concernés si l'impédance d'entrée mesurée (Zem) à une valeur différente d'une plage de valeurs prédéterminés. La plage de valeurs prédéterminées est typiquement aux environs de l'impédance d'entrée du convertisseur satellite.

De préférence, le dispositif comprend des moyens de commande agencés à contrôler le niveau de limitation de courant pour chaque paire de fils. Ceci permet, lors de la mise en route de la transmission d'énergie, de transmettre de l'énergie en limitant le niveau à une valeur très basse, par exemple de l'ordre de 5 milliampères. Un tel courant est sans danger pour l'homme qui serait en contact avec les paires de fils. Ensuite, lors du mode de fonctionnement "normal", le niveau de limitation de courant peut être augmenté à une valeur plus élevée, par exemple de l'ordre de 60 milliampères.

Afin de permettre au central de détecter une anomalie dans le transmission vers les convertisseurs satellite, les convertisseurs satellites sont agencés à générer un signal d'identification et le transmettre au central et le central est agencé à recevoir le signal d'identification. De préférence le signal d'identification est la mesure du courant d'entrée du convertisseur satellite et le central comprend des moyens agencer à provoquer une coupure de l'alimentation de la paire de fils concernés lorsque la différence entre le courant d'entrée du convertisseur satellite et le courant de sortie correspondant du central atteint un seuil prédéterminé.

De préférence, le central est agencé à générer une coupure de courant dans une des paires de fils tout en maintenant l'alimentation dans les autres paires de fils. Ceci permet de maintenir une alimentation dans le système lorsqu'une panne se produit dans quelques paires de fils uniquement. Dans un cas particulier ou une panne se produit sur une paire appartenant à un groupe de six paires, les cinq paires restantes pourront, lors de la coupure d'alimentation d'énergie de la paire "en panne", transporter l'énergie électrique qui aurait normalement dû passer par cette paire.

Suivant une forme de réalisation particulière, le central comporte pour chaque paire de fils, un convertisseur central respectif. Il est toutefois concevable de prévoir un seul convertisseur central combiné avec des limitateurs de courant.

Un système concerné par l'invention peut comprendre un poste de base ou central, une source d'énergie électrique disponible au central et présentant une tension nominale, au moins un poste auxiliaire ou satellite à alimenter en énergie électrique, et des paires de fils de télécommunication qui relient le central et le satellite. Il peut y avoir plusieurs centraux de tailles différentes, reliés ou non entre eux. Un ou plusieurs satellites peuvent être reliés à un ou plusieurs centraux.

D'autres détails et particularités de l'invention ressortiront de la description des dessins schématiques qui sont annexés au présent mémoire et qui illustrent, à titre d'exemples non limitatifs, le procédé et des formes de réalisation particulières du dispositif suivant l'invention.
La figure 1 montre un central et un satellite comportant le matériel concerné par l'invention et des paires de fils installées entre le central et le satellite.
Les figures 2 et 3 montrent deux modes de raccordement entre les convertisseurs commandés et les convertisseurs satellites.
La figure 4 montre une disposition d'un appareil de mesure d'intensité sur un fil d'une paire.
La figure 5 montre un développement de l'appareil de mesure de la figure 4, complété par des émetteur et récepteur de signal en fréquence modulée.
La figure 6 montre un type de branchement de l'émetteur de la figure 5
La figure 7 montre un type préféré de branchement de l'émetteur montré à la figure 5.
La figure 8 montre une représentation des courants et tensions à prendre en compte autour d'un convertisseur satellite pour une gestion améliorée de son fonctionnement.
La figure 9 montre en graphique la relation entre le courant d'entrée du convertisseur satellite de la figure 8 et la puissance que celui-ci peut délivrer.
La figure 10 montre en graphique la relation entre une tension de stabilisation calculée pour le convertisseur satellite de la figure 8 et la puissance que celui-ci peut délivrer.
La figure 11 montre un branchement usuel à la terre d'un équipement de télécommunication et de sa source d'alimentation.
La figure 12 montre, en complément au branchement représenté à la figure 11, un branchement d'un dispositif de contrôle de raccordement à la terre ou de détection d'un défaut de terre basé sur la tension U, branché aux pôles d'entrée de l'équipement de télécommunication.
La figure 13 montre un branchement avec les détails d'impédances de sortie et d'entrée aux paires de fils, ainsi que les ponts de diodes.

Dans les différentes figures, les mêmes notations de référence désignent des éléments identiques ou analogues.

Pour faciliter la compréhension de l'invention, sans que cela puisse être considéré comme limitant sa portée, on décrira d'abord le dispositif de l'invention.

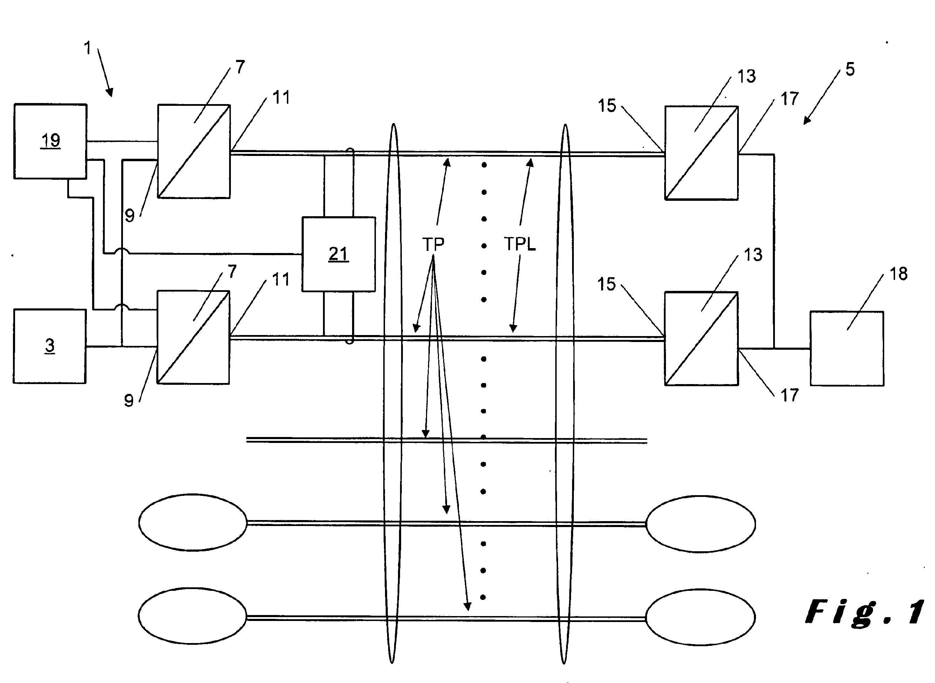

Un dispositif de transmission d'énergie électrique, d'une puissance déterminée, auquel s'adresse l'invention concerne un système de télécommunications par fils qui peut comprendre (figure 1)
- un poste de base ou central 1,
- une source 3 d'énergie électrique disponible au central 1, présentant une tension nominale Ub de par exemple 48 volts en courant continu (48 Vdc ci-après),
- au moins un poste auxiliaire ou satellite 5 à alimenter en énergie électrique, et
- des paires de fils de télécommunication TP (pour "twisted pair" en anglais, c'est-à-dire "paire de fils torsadée") qui relient le central 1 et le satellite 5.

Parmi ces paires de fils TP, de nombreuses sont en réserve et donc non utilisées pour la télécommunication. Certaines peuvent alors être utilisées pour de la transmission d'énergie électrique. Il n'est toutefois pas exclu de prévoir qu'une paire de fils soit utilisée tant pour la transmission d'énergie que pour la transmission de données à l'utilisateur final.

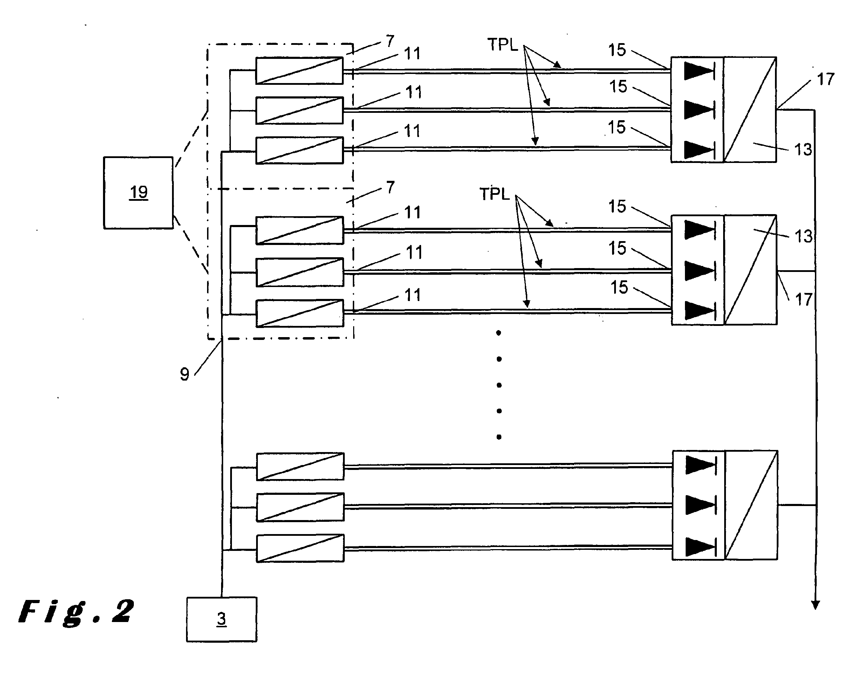

Suivant l'invention, le dispositif prévu pour cette transmission d'énergie comprend au central 1, pour chaque paire de fils nécessaire et libre TPL utilisée pour ladite transmission, un convertisseur commandé 7 agencé pour recevoir à une entrée 9 branchée à la source d'énergie 3 la tension nominale Ub et pour transformer celle-ci en tensions choisies, dont une tension admise Ua définie ci-dessous, disponibles à au moins une sortie 11 branchée à ladite paire libre nécessaire TPL. Il faut comprendre ici qu'un même convertisseur commandé 7 peut cependant servir à alimenter plusieurs paires TPL (figure 2) et, qu'à cet effet, il peut comporter plusieurs sorties 11, par exemple une sortie 11 par paire TPL, et même des sorties 11 de réserve. Dans un convertisseur commandé 7 utilisé pour l'invention, la commande prévue est agencée pour pouvoir régler séparément pour chaque sortie 11 les valeurs de tension et d'intensité et une coupure de ces tension et intensité.

A l'endroit du satellite 5, la paire de fils nécessaire TPL est branchée à un convertisseur satellite 13 qui comporte une entrée 15, d'une impédance d'entrée Ze connue, et une sortie 17 branchée en parallèle avec la ou les sorties 17 d'autres convertisseurs satellites 13 pour obtenir la puissance déterminée nécessaire pour une utilisation 18.

Des moyens de commande 19, par exemple un micro-contrôleur ou un automate programmable, sont raccordés fonctionnellement (ou intégrés) à chaque convertisseur commandé 7 ; ils sont agencés pour commander celui-ci de façon à ce que sa ou chaque sortie 11 susdite délivre à la paire de fils nécessaire TPL correspondante, au moment d'une mise en route, des tension Us et intensité Is réduites de sécurité. Typiquement une unité de commande 19 est agencé à contrôler six convertisseurs centraux 7.

Par exemple, le convertisseur commandé 7, prévu pour réaliser l'invention, peut être un assemblage de plusieurs blocs comportant chacun plusieurs convertisseurs indépendants 7 qui peuvent être commandés séparément par les moyens de commande 19 du genre automate programmable ou bien celui-ci peut commander des groupes de trois convertisseurs indépendants 7 ou encore il peut y avoir un panachage, en fonction de besoins particuliers, de groupes de nombres différents de convertisseurs indépendants 7 dont chaque groupe est commandé séparément.

Raccordés fonctionnellement aux moyens de commande 19, il y a des moyens 21 de mesure de l'impédance d'entrée Ze de chaque convertisseur satellite 13. Ces moyens de mesure 21 sont agencés de façon à ce que, si l'impédance d'entrée mesurée Zem ne correspond pas chaque fois à l'impédance d'entrée Ze connue du convertisseur satellite 13, ils provoquent, par l'intermédiaire des moyens de commande 19, une coupure de l'alimentation d'au moins la ou les paires TPL concernées par une non correspondance, et une suspension de la mise en route.

Par contre, les moyens de mesure 21 sont agencés de façon à ce que, si cette impédance d'entrée mesurée Zem correspond chaque fois à l'impédance d'entrée Ze connue, ils provoquent, aussi par l'intermédiaire des moyens de commande 19, une commande du convertisseur commandé 7 correspondant pour que soit délivrée à sa paire de fils TPL correspondant à la mesure, par la sortie 11 associée, la tension admise Ua, avec l'intensité réduite de sécurité Is et, après un délai de sécurité, avec une intensité admise la définie ci-dessous.

Comme le propose la figure 1, la mesure de l'impédance Ze peut être faite à travers la paire de fils parce que l'impédance de cette paire est considérée connue.

Comme le montre la figure 2, chaque paire de fils nécessaire TPL peut être reliée à une sortie 11 distincte d'un convertisseur commandé 7, et à entrée 15 distincte d'un convertisseur satellite 13. De préférence, chaque sortie 11 d'un convertisseur commandé 7 est alors agencée pour donner des valeurs d'un ordre de grandeur respectant les normes de sécurité, soit typiquement de
- 2 milliampères pour un courant de fuite à la terre,
- 25 milliampères maximum en cas de fuite différentielle entre deux fils de polarités inverses d'une même paire torsadée ou d'une paire à l'autre,
- 60 milliampères pour une intensité de charge maximum en mode RTF - C,
- 20 watts de puissance maximale,
- 320 volts de tension entre les fils de la paire (soit ± 160 volts entre un fil et la terre).

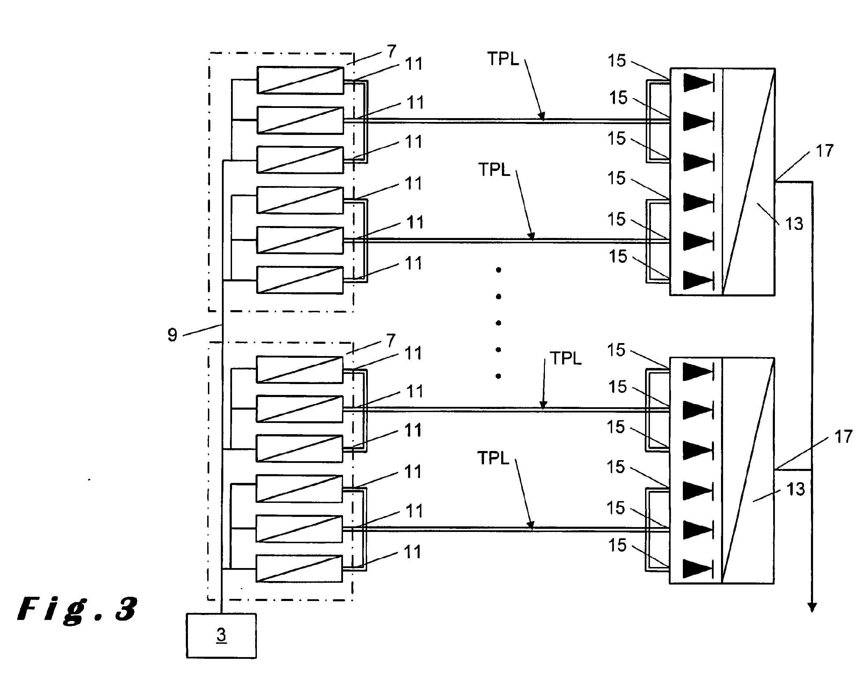

Dans une autre disposition, montrée à la figure 3, chaque paire de fils nécessaire TPL est reliée à trois sorties 11 de convertisseur(s) commandé(s) 7, avantageusement d'un même convertisseur 7 qui comporte trois sorties, et à trois des six entrées 15 de convertisseur(s) satellite(s) 13, également avantageusement d'un même convertisseur 13. De préférence ici aussi, pour chaque paire de fils nécessaire TPL, chacune desdites sorties 11 est agencée pour donner des valeurs d'un ordre de grandeur respectant les normes de sécurité, soit typiquement de
- 2 milliampères pour un courant de fuite à la terre,
- 200 milliampères pour une intensité de charge maximum en mode RTF - V,
- 60 watts de puissance maximale,
- 320 volts de tension entre les fils de la paire (soit ± 160 volts par rapport à la terre).

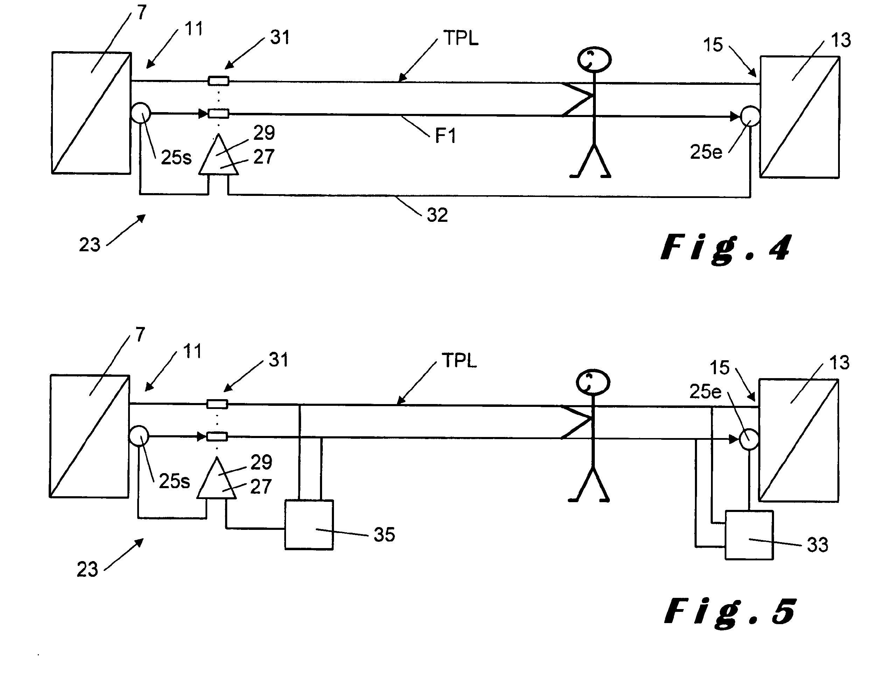

Le dispositif suivant l'invention peut encore comporter (figure 4) un appareil de mesure 23, différent des moyens de mesure 21 ci-dessus, qui comporte, raccordés fonctionnellement entre eux, des moyens 25 (25s, 25e) pour mesurer simultanément pour chaque paire TPL, dans un même fil F1 de celle-ci, l'intensité Ims à la sortie 11 du convertisseur commandé 7 et l'intensité Ime à l'entrée 15 du convertisseur satellite 13, et des moyens 27 pour calculer la différence entre l'intensité Ims à la sortie 11 et l'intensité Ime à l'entrée 15. A ces moyens de calcul 27 sont raccordés ou combinés fonctionnellement des moyens de comparaison 29 pour vérifier si cette différence est inférieure ou supérieure à une valeur typiquement de l'ordre de 25 milliampères (selon la norme IEC479-1 table DC2), et ces moyens de comparaison 29 sont raccordés fonctionnellement à des moyens 31 agencés pour couper l'alimentation d'au moins cette paire TPL si ladite différence est supérieure, avec une réaction de coupure typiquement inférieure à 20 millisecondes (selon la norme IEC479-1 table DC2). A cet effet, ces moyens de coupure 31 peuvent être raccordés au convertisseur commandé 7 ou même en faire partie.

Les moyens de commande 19 du convertisseur commandé 7 étant situés logiquement à l'endroit du central 1, l'appareil de mesure d'intensité 23 y est aussi installé de préférence, à l'exception de la partie 25e des moyens 25 de mesure de l'intensité Ime à l'entrée ou aux entrées 15 du ou des convertisseurs satellites 13.

Pour amener la valeur d'intensité Ime mesurée à ou aux entrées 15 depuis le satellite 5 jusqu'au central 1, il faudrait cependant une liaison 32 qui consomme au moins un fil de réserve.

Pour éviter cette liaison 32, le dispositif de l'invention peut comporter (figure 5), associé à la partie 25e des moyens de mesure 25, à l'endroit du satellite 5, un engin émetteur 33 agencé pour transformer cette valeur d'intensité mesurée Ime en une fréquence modulée en fonction de la valeur mesurée et pour appliquer cette fréquence modulée à la paire TPL de fils mesurée.

Alors, à l'endroit du convertisseur commandé 7 on dispose un engin récepteur 35 correspondant agencé pour capter ladite fréquence modulée sur la même paire de fils TPL, pour la transformer à l'inverse en la valeur d'intensité mesurée Ime et pour transmettre cette valeur aux moyens 27 prévus pour calculer ladite différence.

Dans un système de télécommunications, la bande de fréquence audio est comprise entre 300 et 3400 Hz et celle pour une transmission de données commence à 25 kHz. On choisira pour la fréquence modulée transmettant l'intensité Ime une bande non utilisée située entre ces deux bandes de fréquences et où une diaphonie n'est pas gênante, par exemple de 8000 Hz à 8200 Hz pour une intensité allant de 0 à 200 milliampères respectivement (soit une progression de 1 Hz pour mA).

Superposer la fréquence de la mesure Ime à la paire TPL, plutôt que de la ramener au central 1 par une autre paire de fils de surveillance, augmente le niveau de sécurité par redondance de l'information sur la même paire et diminue de manière globale le nombre de paires allouées au transport d'énergie.

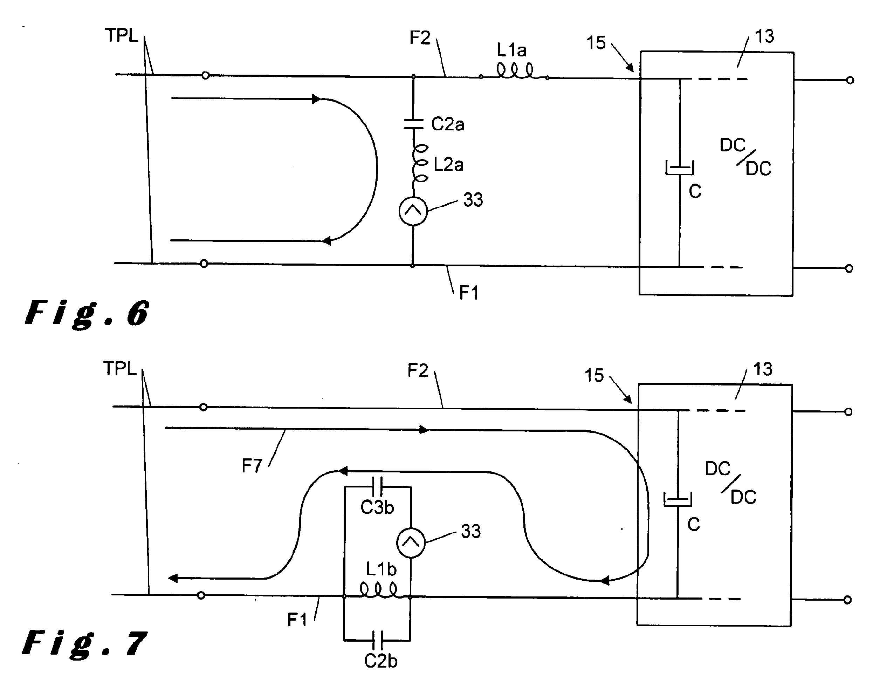

La figure 6 montre un schéma usuel pour le couplage de la fréquence modulée (FM) à la paire de fils TPL correspondante. De l'engin émetteur 33, une des bornes de sortie est raccordée directement à un fil F1 de la paire TPL tandis que l'autre borne de sortie est raccordée à l'autre fil F2 de la paire par un montage en série d'un condensateur C2a de couplage FM (de 0,3 µF/400V) et d'une bobine L2a de couplage FM de (1 mH/200 mA). Une bobine L1a de découplage (de 1 mH/200 mA) doit être posée entre la borne de l'entrée 15 vers cet autre fil F2 et la jonction du condensateur C2a et dudit autre fil F2. L'entrée 15 comporte usuellement entre ses deux bornes un condensateur C de découplage (de 10 µF). (Les valeurs indiquées entre parenthèses le sont à titre d'exemple).

Dans le montage de la figure 6, une flèche F6 montre le trajet parcouru par le signal FM produit par l'engin émetteur 33.

La figure 7 montre un schéma préféré pour le couplage de la fréquence modulée (FM) à la paire de fils TPL correspondante. Par exemple entre le fil F1 et la borne de l'entrée 15 du convertisseur satellite 13 destinée à ce fil F1 est raccordé un triple montage en parallèle d'un condensateur C2b de découplage FM (de 3 µF/16V), d'une bobine L1b de découplage (de 100 µH/200 mA) et d'un groupe comportant en série l'engin émetteur 33 et un condensateur C3b de couplage (de 2 µF/16V).

Dans le montage de la figure 7, une flèche F7 montre le trajet parcouru par le signal FM produit par l'engin émetteur 33. Comme on le voit, on profite, d'une part, de la présence du condensateur C de découplage (de 10 µF) et, avantageusement d'autre part, les éléments L1b et C3b sont de l'ordre de dix fois plus petits que les éléments respectifs L1a et C2a du circuit de la figure 6. De plus, la bobine L2a de la figure 6 est remplacée à la figure 7 par le condensateur C3b de plus petite taille.

Un procédé particulier de l'invention est décrit ci-après en se référant au dispositif ci-dessus, pour en faciliter la compréhension, mais sans que cela ne puisse être pris comme limitant la portée dudit procédé. Le cas échéant, le procédé donne des étapes et/ou instructions de programmation de l'automate programmable mentionné ci-dessus.

Comme exposé au début, le procédé de l'invention est destiné à une transmission d'énergie électrique de manière sécurisée, d'une puissance déterminée, dans un système de télécommunications par fils tel que décrit ci-dessus.

Au départ, on réalise, suivant la figure 1, une sélection de paires de fils libres TPL entre le central 1 et le satellite 5, et une sélection des tension Ua et intensité la admises dans chaque paire de fils libre TPL. A partir d'un calcul d'une puissance utile que chaque paire de fils libre TPL peut transmettre, on calcule le nombre de paires TPL nécessaires pour transmettre la puissance déterminée, en divisant celle-ci par ladite puissance utile par paire.

Ensuite, on peut effectuer un branchement, à ladite source d'énergie 3 du central 1, de chaque paire TPL nécessaire par l'intermédiaire d'au moins une sortie 11 d'un convertisseur commandé 7 qui convertit la tension nominale en tensions choisies, dont la tension admise Ua.

A l'endroit du satellite, on branche chaque paire TPL nécessaire à au moins une entrée 15 d'un convertisseur satellite 13, d'une impédance d'entrée connue et qui, recevant à l'entrée 15 la tension admise Ua, met à disposition à une sortie 17 une tension utile pour le satellite 5. On branche de plus en parallèle des sorties 17 des convertisseurs satellites 13 afin d'obtenir la puissance déterminée.

Suivant l'invention, pour que les opérations soient faites dans les meilleures conditions de sécurité, le procédé comprend, à la mise en route d'une transmission d'énergie, une commande du ou de chaque convertisseur commandé 7 pour que sa sortie 11 délivre à sa paire de fils TPL correspondante des tension Us et intensité Is continues réduites de sécurité.

La tension continue Us de quelques volts (< 10 V) appliquée par le convertisseur central peut comporter l'information du groupe de paires auquel elle est connectée au convertisseur central 7. Une réalisation pratique consiste à ajouter une composante alternative (AC) d'amplitude faible de l'ordre du volt, dont la fréquence (quelques dizaines de hertz) est une fonction du groupe (variant ici de 1 à 14 ) de paires et de l'adresse (variant ici de 1 à 20) du convertisseur central 7, ce qui permet, avec un fréquencemètre en bout de ligne, de facilement repérer les paires torsadées à connecter aux entrées d'un même convertisseur satellite 13. Tout en recevant l'information du groupe de paires, on mesure l'impédance de charge ou d'entrée Ze et tant qu'elle ne correspond pas à l'impédance d'entrée Zem d'un convertisseur satellite 13 le système reste dans cet état de démarrage.

Si l'impédance d'entrée mesurée Zem correspond chaque fois à l'impédance d'entrée connue Ze, on organise une commande du ou de chaque convertisseur commandé 7 pour que chacun délivre à sa paire de fils la tension admise Ua, avec l'intensité réduite Is de sécurité.

Après un délai de sécurité, on organise une poursuite de la mise en route par une commande du ou de chaque convertisseur commandé 7 pour que chacun délivre à sa paire de fils TPL les tension Ua et intensité la admises.

Avantageusement, pour ladite mesure de l'impédance d'entrée Ze, on règle le convertisseur commandé 7 de façon à ce que chaque paire de fils nécessaire TPL reçoive une très basse tension de sécurité Us, sans effet physiologique pour l'homme, typiquement de l'ordre de 50 volts et, de préférence, une très faible intensité de sécurité Is, sans danger pour l'homme, typiquement de l'ordre de 10 milliampères. Des valeurs inférieures peuvent être envisagées mais elles doivent être d'un niveau suffisant pour obtenir une mesure fiable de l'impédance.

Si l'impédance d'entrée mesurée Zem correspond à l'impédance d'entrée connue Ze, on peut régler alors le convertisseur commandé 7 de façon à ce que, pendant le délai de sécurité, chaque paire de fils nécessaire TPL reçoive la tension admise Ua notamment comprise entre ± 110 et ± 230 volts, et typiquement de l'ordre de 160 volts, et une intensité de sécurité Is typiquement de l'ordre de 5 milliampères.

Tout en testant l'impédance, chaque convertisseur central 7 produit un signal dont la fréquence est fonction du numéro de groupe, variant ici de 1 à 14, et de l'adresse du module (variant ici de 1 à 16) dont il fait partie. Par exemple, la fréquence 101,24 Hz signifie le groupe de paires 10 et le module central d'adresse 12; le dernier chiffre 4 n'ayant pas de signification doit être ignoré.

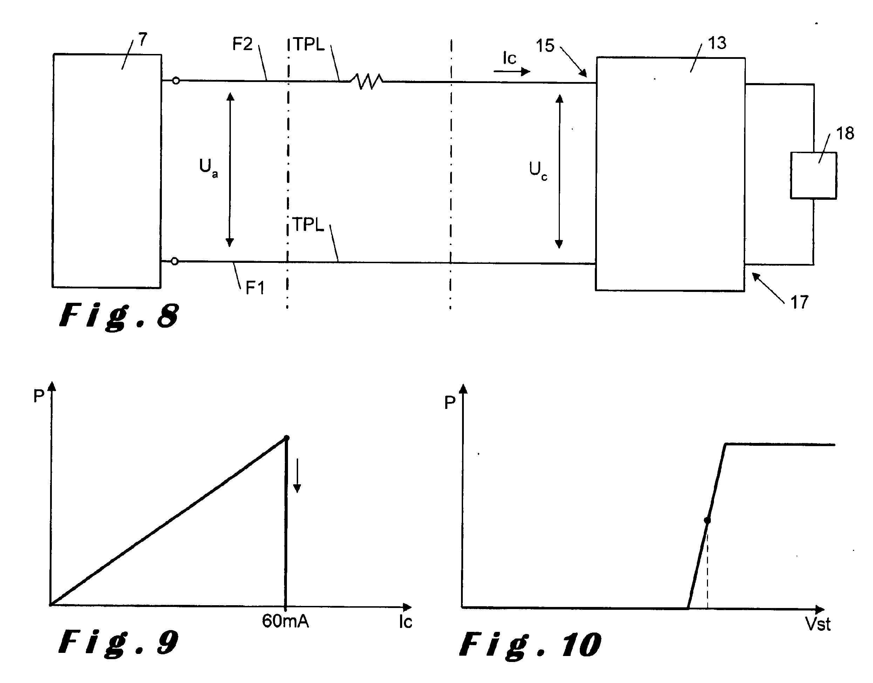

Le convertisseur satellite 13, de courant continu à courant continu, fonctionnant par découpage présente toujours une résistance d'entrée négative, donc si (figure 8) la tension d'entrée Uc décroît, l'intensité à l'entrée Ic s'accroît. La tension admise Ua appliquée à la paire TPL est limitée en intensité la à par exemple 60 milliampères. Si l'on considère le graphique de la figure 9 qui montre la courbe de la puissance disponible P en fonction du courant la dans la paire TPL, on sait que cette courbe s'arrête à un point optimum correspondant à l'intensité de 60 mA et que ce point est instable, une demande de puissance supplémentaire fortuite amène à l'effondrement de la puissance disponible. Pour éviter cela, il faut constamment maintenir le courant en dessous des 60 mA et cela n'est pas aisé dans ce contexte.

Pour pallier ce problème, il est proposé de munir le convertisseur satellite d'un calculateur "intelligent" et de programmer celui-ci pour
- calculer la résistance de ligne R_{L} de la paire TPL à un moment donné alors qu'il connaît les valeurs Ua, Ic et Uc définies ci-dessus, R_{L} = (Ua -Uc)/Ic,
- calculer une tension de stabilisation Ust = Ua - (60mA x R_{L}).

Le graphique de la figure 10 montre la courbe, de la puissance P en fonction de la tension de stabilisation Ust, à prendre en considération dans ce cas. Il apparaît que, puisque le point de fonctionnement pour la valeur Ust est situé sur une pente à l'écart des extrémités de cette pente, une erreur sur la valeur de cette tension de stabilisation Ust n'a pas d'incidence gênante sur la puissance passée et surtout sur le fonctionnement général des appareils reliés au convertisseur satellite 13.

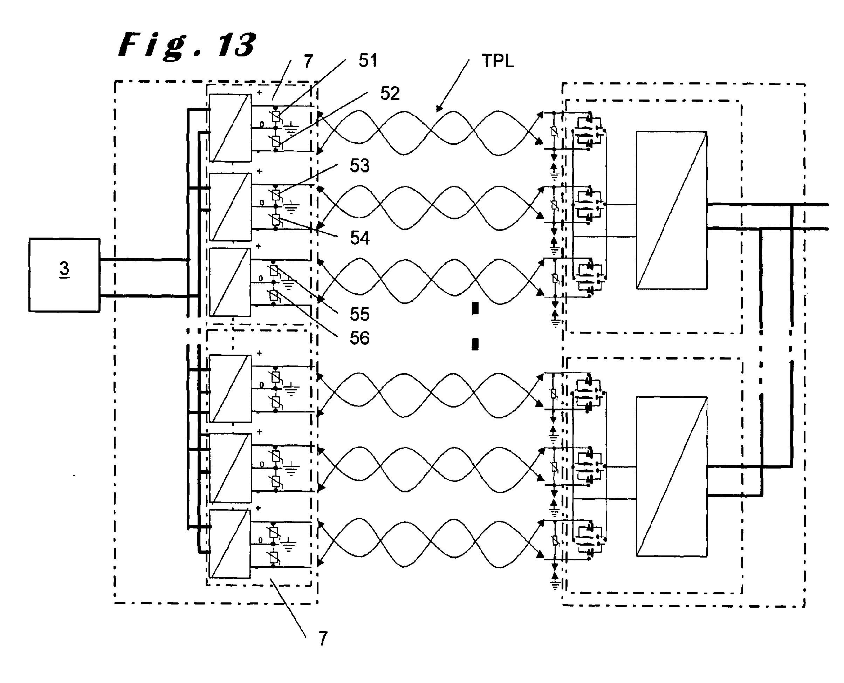

Faisant référence à la figure 13, la tension de sortie des convertisseur centraux sont symétriques par rapport à la terre (par exemple + 160 et - 160 V), en prévoyant des hautes impédances 51 à 56 de valeurs égales (par exemple 1 mega-Ohm). Pour la sécurité des opérateurs chargés du câblage du dispositif de l'invention, il y a donc lieu d'être assuré que les branchements à la terre sont corrects.

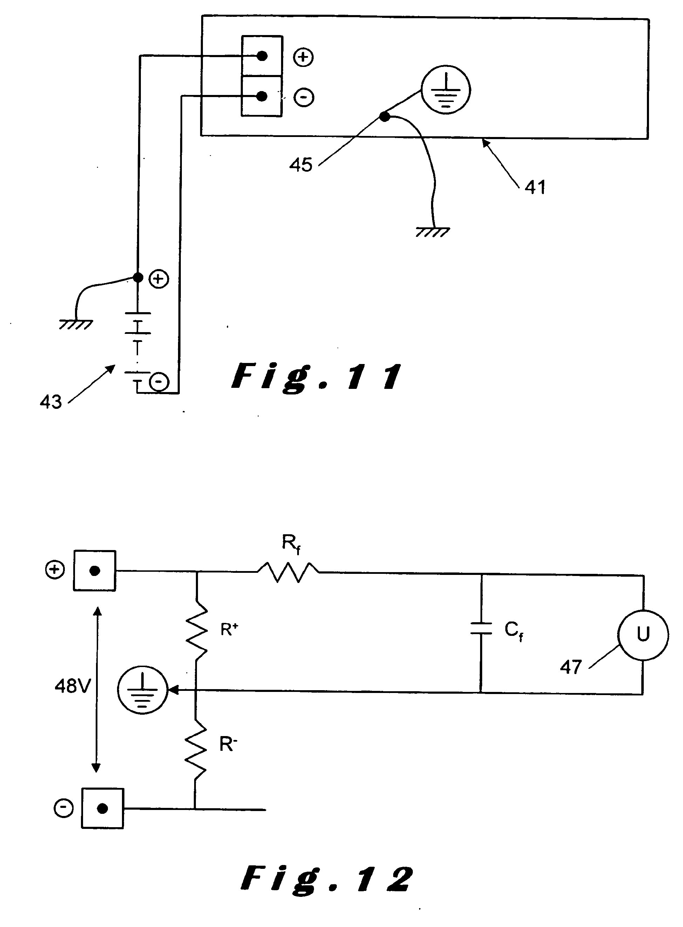

A cet effet, les figures 11 et 12 montrent un mode de branchement approprié. Des équipements 41, comme ceux de télécommunication, sont fréquemment alimentés par une batterie d'accumulateur 43 dont il est connu de raccorder le pôle positif à la terre là où se trouve cette batterie 43. De ce fait, le pôle positif de l'équipement 41 est également relié à la terre. Les pôles positif et négatif d'entrée d'alimentation de cet équipement 41 sont isolés galvaniquement de ce châssis 45. Il est alors proposé,
- d'une part, de relier le châssis métallique 45 de l'équipement 41 à la terre à l'endroit où il se trouve,
- d'autre part, de relier séparément le pôle positif et le pôle négatif de l'équipement 41 au châssis 45 de celui-ci par chaque fois une résistance de chute R⁺ et R⁻. Ces résistances sont typiquement de l'ordre de 10 kohm afin de limiter les pertes.

Ce montage est complété par un moyen de mesure de tension 47 branché entre le pôle positif de l'équipement 41 et le châssis 45 de celui-ci, par l'intermédiaire d'un circuit filtrant comportant avantageusement une résistance Rf et un condensateur Cf. Une sortie de tension mesurée de ce moyen de mesure 47 est raccordée à un moyen de comparaison, connu en soi, pour comparer ladite tension mesurée à un seuil de tension de typiquement 3 volts et pour fournir un signal d'avertissement ou, de préférence, un signal exploitable pour couper immédiatement l'alimentation de l'équipement 41 en cause.

Par exemple, si la batterie 43 délivre 48 volts à l'équipement 41, et si les prises de terre sont bien raccordées de part et d'autre et efficaces, le moyen de mesure 47 ne peut pas détecter plus de 3 ou 4 volts. Des valeurs supérieures signifient une déficience de l'une ou l'autre prise de terre. Une valeur de l'ordre de 24 volts signifie une absence d'au moins une connexion à la terre. On comprend qu'en établissant une seule prise de terre pour l'équipement 41, on obtient en même temps un contrôle de la prise de terre de la batterie 43 et un contrôle de celle dudit équipement 41. Ce dispositif est également un moyen de contrôle de la chute de tension dans le câble d'alimentation et donc une vérification de l'adaptation de la section du câble par rapport à l'intensité du courant qui y circule.

En d'autres termes le dispositif comprend, lorsque la source d'énergie est une source de tension continue, des moyens agencés à déterminer l'impédance entre le châssis des convertisseurs centraux et une desdites bornes de la source d'énergie, en particulier la borne positive, et à générer un signal lorsque l'impédance dépasse un seuil prédéterminé. Ce signal peut être utilisé pour générer une alarme ou le cas échéant couper l'alimentation sur les paires de fils concernées du châssis en question. Les moyens illustrés à la figure 12 déterminent l'impédance en mesurant la tension entre la borne positive et le châssis de l'équipement central. On vérifie que cette tension ne dépasse pas un certain seuil, par exemple 4 Volts.

### Légende des figures

- Cf: condensateur de filtrage (figure 12)

- F1: un fil d'une paire TP/TPL
- F2: l'autre fil d'une paire TP/TPL
- F6: flèche du trajet du signal FM figure 6
- F7: flèche du trajet du signal FM figure 7

- Ia: intensité admise
- Ic: intensité d'entrée de 13 (figure 8)
- Ime: intensité mesurée en 15
- Ims: intensité mesurée en 11
- Is: intensité de sécurité

- Rc: résistance de chute (figure 12)
- Rf: résistance de filtrage (figure 12)
- RI: résistance de ligne (figure 8)

- TP: paire de fils
- TPL: paire de fils libre

- Ust: tension de stabilisation
- Ua: tension admise
- Ub: tension nominale
- Uc: tension d'entrée de 13 (figure 8)
- Us: tension de sécurité

- Ze: impédance d'entrée de 13
- Zem: impédance d'entrée mesurée de 13

- 1: poste de base ou central
- 3: source d'énergie ou de courant en 1
- 5: poste auxiliaire ou satellite
- 7: convertisseur commandé en 1
- 9: entrée de 7
- 11: sortie de 7
- 13: convertisseur satellite en 5
- 15: entrée de 13
- 17: sortie de 13
- 19: moyens de commande de 7
- 21: moyens de mesure d'impédance
- 23: appareil de mesure d'intensité
- 25: moyens de mesure d'intensité sur fil F1 ou F2 de 23 (notamment 25e et 25s)
- 27: moyens de calcul de différence d'intensité de 23
- 29: moyens de comparaison de 23
- 31: moyens de coupure d'alimentation
- 33: engin émetteur
- 35: engin récepteur
- 41: équipement électronique
- 43: batterie d'accumulateur
- 45: châssis métallique
- 47: moyen de mesure de tension
- 51 à 56: impédance de sortie des convertisseurs centraux d'un groupe

## Revendications

1. Dispositif de transmission d'énergie pour un système de télécommunications par fils, le système comprenant des première et deuxième paires de fils (TP) de télécommunication, le dispositif comprenant:
- un central (1) ou poste de base agencé à être relié à une source d'énergie électrique et à y connecter les première et deuxième paires de fils,
- un satellite (5) ou poste auxiliaire, le satellite comprenant un premier convertisseur satellite (13), le premier convertisseur satellite comprenant une première entrée agencée à y connecter la première paire de fils,
**caractérisé en ce que** le premier convertisseur satellite comprend une deuxième entrée agencée à y connecter la deuxième paire de fils.

2. Dispositif suivant la revendication 1 de transmission d'énergie dans un système de télécommunications par fils, le système comprenant en outre des troisième et quatrième paires de fils (TP) de télécommunication, dans lequel:
- le satellite comprend un deuxième convertisseur satellite agencé à y connecter les troisième et quatrième paires de fils;
- le central (1) est agencé à :
- y connecter les troisième et quatrième paires de fils;
- produire un premier signal et transmettre ce premier signal au première et deuxième paires de fils;
- produire un deuxième signal différent du premier signal et transmettre ce deuxième signal au troisième et quatrième paires de fils.

3. Dispositif suivant la revendication 1 ou 2, dans lequel le convertisseur satellite comprend :
- un premier pont de diode comprenant une première entrée non polarisée reliée à la première entrée du convertisseur satellite et une première sortie polarisée;
- un deuxième pont de diode comprenant une deuxième entrée non polarisée reliée à la deuxième entrée du convertisseur satellite et. une deuxième sortie polarisée; et
- dans lequel la première sortie polarisée est reliée à la deuxième sortie polarisée, lesdites sorties polarisées étant agencées à fournir l'énergie à l'étage d'entrée du convertisseur satellite.

4. Dispositif suivant l'une des revendications précédentes, comprenant des moyens (21) de mesure d'impédance agencés à mesurer l'impédance d'entrée du convertisseur satellite; et des moyens de commande reliés aux moyens de mesure et agencés à provoquer une coupure de l'alimentation des paires de fils concernés si l'impédance d'entrée mesurée (Zem) à une valeur différente d'une plage de valeurs prédéterminées.

5. Dispositif suivant l'une des revendications précédentes, comprenant des moyens de commande (19) agencés à contrôler le niveau de limitation de courant pour chaque paire de fils.

6. Dispositif suivant l'une des revendications précédentes, dans lequel les convertisseurs satellites sont agencés à générer un signal d'identification et le transmettre au central et dans lequel le central est agencé à recevoir le signal d'identification.

7. Dispositif suivant la revendication 6, dans lequel le signal d'identification est la mesure du courant d'entrée du convertisseur satellite et le central comprend des moyens agencer à provoquer une coupure de l'alimentation de la paire de fils concernés lorsque la différence entre le courant d'entrée du convertisseur satellite et le courant de sortie correspondant du central atteint un seuil prédéterminé.

8. Dispositif suivant la revendication 6 ou 7, comprenant des moyens agencés à transformer le courant d'entrée (Ime) à l'entrée (15) du convertisseur satellite (13) en une fréquence variant en fonction de la valeur mesurée, à appliquer, près de l'entrée (15) du convertisseur satellite (13) correspondant, cette fréquence à la paire de fils (TPL) mesurée, à prélever cette fréquence près de la sortie du convertisseur commandé correspondant, et à utiliser cette fréquence pour la comparer à la mesure locale du convertisseur satellite (13).

9. Dispositif suivant l'une des revendications précédentes, dans lequel le central est agencé à générer une coupure de courant dans une des paires de fils tout en maintenant l'alimentation dans les autres paires de fils.

10. Dispositif suivant l'une des revendications précédentes, dans lequel le central (1) comporte des convertisseurs centraux, chaque convertisseur central étant relié respectivement à une des paires de fils.

11. Dispositif suivant l'une de revendications précédentes, comprenant des moyens reliés au convertisseur satellite agencés à déterminer une tension de stabilisation Ust (Ust = Ua - (Iₘₐₓ x R_{L})) à appliquer au convertisseur satellite dans lequel
Ua est la tension de sortie du convertisseur central,
Iₘₐₓ est le courant maximum autorisé,
R_{L} est la résistance de ligne de la paire de fils, déterminée par R_{L} = (Ua - Uc)/Ic, Uc étant la tension d'entrée du convertisseur satellite, Ic étant le courant de ligne à un moment donné.

12. Dispositif suivant la revendication 10, dans lequel les convertisseurs centraux comprennent un châssis, le dispositif comprenant, lorsque la source d'énergie est une source de tension continue comprenant une borne positive et négative, des moyens reliés au central agencés:
- à déterminer l'impédance entre le châssis des convertisseurs centraux et une desdites bornes de la source d'énergie, en particulier la borne positive, et,
- à générer un signal lorsque l'impédance dépasse un seuil prédéterminé.

## Claims

1. Energy transmission device for a cabled communication system, the system comprising first and second pairs of telecommunication wires (TP), the device comprising:
- an exchange (1) or base station arranged to be connected to a source of electrical energy and for the first and second pairs of wires to be connected thereto;
- a satellite (5) or auxiliary station, the satellite comprising a first satellite converter (13), the first satellite converter comprising a first input arranged for the first pair of wires to be connected thereto,
**characterised in that** the first satellite converter comprises a second input arranged for the second pair of wires to be connected thereto.

2. Device according to Claim 1 for the transmission of energy in a system for cabled telecommunication, the system also comprising third and fourth pairs of telecommunication wires (TP), in which:
- the satellite comprises a second satellite converter arranged for the third and fourth pairs of wires to be connected thereto;
- the exchange (1) is arranged for:
- the third and fourth pairs of wires to be connected thereto;
- a first signal to be produced and for this first signal to be transmitted to the first and second pairs of wires;
- a second signal different from the first signal to be produced and for this second signal to be transmitted to the third and fourth pairs of wires.

3. Device according to Claim 1 or 2, in which the satellite converter comprises:
- a first diode bridge comprising a first non-biased input connected to the first input of the satellite converter and a first biased output;
- a second diode bridge comprising a second non-biased input connected to the second input of the satellite converter and a second biased output; and
- in which the first biased output is connected to the second biased output, the said biased output being arranged to supply energy to the input stage of the satellite converter.

4. Device according to one of the preceding claims, comprising impedance measuring means (21) arranged to measure the input impedance of the satellite converter; and control means connected to the measuring means and arranged to cause a cutting off of the supply to the pairs of wires concerned if the measured input impedance (Zem) has a value different from a range of predetermined values.

5. Device according to one of the preceding claims, comprising control means (19) arranged to control the current limitation level for each pair of wires.

6. Device according to one of the preceding claims, in which the satellite converters are arranged so as to generate an identification signal and transmit it to the exchange and in which the exchange is arranged to receive the identification signal.

7. Device according to Claim 6, in which the identification signal is the measurement of the input current of the satellite converter and the exchange comprises means arranged to cause a cutting off of the supply to the pair of wires concerned when the difference between the input current of the satellite converter and the corresponding output current of the exchange reaches a predetermined threshold.

8. Device according to Claim 6 or 7, comprising means arranged to transform the input current (Ime) at the input (15) of the satellite converter (13) into a frequency varying according to the measured value, applying, close to the input (15) of the corresponding satellite converter (13), this frequency to the measured pair of wires (TPL), sampling this frequency close to the output of the corresponding controlled converter, and using this frequency for comparing it with the local measurement of the satellite converter (13).

9. Device according to one of the preceding claims, in which the exchange is arranged to generate a cutting off of current in one of the pairs of wires whilst maintaining the supply in the other pairs of wires.

10. Device according to one of the preceding claims, in which the exchange (1) comprises central converters, each central converter being connected respectively to one of the pairs of wires.

11. Device according to one of the preceding claims, comprising means connected to the satellite converter arranged to determine a stabilisation voltage Ust (Ust = Ua - (Imax x RL)) to be applied to the satellite converter, in which
Ua is the output voltage of the central converter,
Imax is the maximum current allowed,
RL is the line resistance of the pair of wires, determined by RL = (Ua - Uc)/Ic, Uc being the input voltage of the satellite converter, lc being the line current at a given moment.

12. Device according to Claim 10, in which the central converters comprise a chassis, the device comprising, when the energy source is a DC voltage source comprising a positive and negative terminal, means connected to the exchange arranged so as:
- to determine the impedance between the chassis of the central converters and one of the said terminals of the energy source, in particular the positive terminal, and
- to generate a signal when the impedance exceeds a predetermined threshold.

## Patentansprüche

1. Vorrichtung zur Energieübertragung für ein drahtgebundenes Telekommunikationssystem, wobei das System ein erstes und ein zweites Paar von Telekommunikationsdrähten (TP) umfasst, wobei die Vorrichtung Folgendes umfasst:
- eine Vermittlungsstelle (1) oder Basisstation, die eingerichtet ist, um mit einer Quelle elektrischer Energie verbunden zu werden und das erste und das zweite Paar von Drähten daran anzuschließen,
- eine/n Satelliten (5) oder Nebenstation, wobei der Satellit einen ersten Satellitenumsetzer (13) umfasst, wobei der erste Satellitenumsetzer einen ersten Eingang umfasst, der eingerichtet ist, um das erste Paar von Drähten daran anzuschließen,
**dadurch gekennzeichnet, dass** der erste Satellitenumsetzer einen zweiten Eingang umfasst, der eingerichtet ist, um das zweite Paar von Drähten daran anzuschließen.

2. Vorrichtung zur Energieübertragung in einem drahtgebundenen Telekommunikationssystem nach Anspruch 1, wobei das System ferner ein drittes und ein viertes Paar von Telekommunikationsdrähten (TP) umfasst, wobei:
- der Satellit einen zweiten Satellitenumsetzer umfasst, der eingerichtet ist, um das dritte und das vierte Paar von Drähten daran anzuschließen;
- die Vermittlungsstelle (1) eingerichtet ist, um:
- das dritte und das vierte Paar von Drähten daran anzuschließen;
- ein erstes Signal zu erzeugen und dieses erste Signal an das erste und das zweite Paar von Drähten zu übertragen;
- ein zweites Signal zu erzeugen, das sich vom ersten Signal unterscheidet, und dieses zweite Signal an das dritte und das vierte Paar von Drähten zu übertragen.

3. Vorrichtung nach Anspruch 1 oder 2, wobei der Satellitenumsetzer Folgendes umfasst:
- eine erste Diodenbrücke, die einen ersten nicht polarisierten Eingang umfasst, der mit dem ersten Eingang des Satellitenumsetzers und einem ersten polarisierten Ausgang verbunden ist;
- eine zweite Diodenbrücke, die einen zweiten nicht polarisierten Eingang umfasst, der mit dem zweiten Eingang des Satellitenumsetzers und einem zweiten polarisierten Ausgang verbunden ist; und
- wobei der erste polarisierte Ausgang mit dem zweiten polarisierten Ausgang verbunden ist, wobei die polarisierten Ausgänge eingerichtet sind, um die Energie an die Eingangsstufe des Satellitenumsetzers zu liefern.

4. Vorrichtung nach einem der vorhergehenden Ansprüche, die Impedanzmessungsmittel (21), die eingerichtet sind, um die Eingangsimpedanz des Satellitenumsetzers zu messen; und Steuerungsmittel umfasst, die mit den Messungsmitteln verbunden sind und eingerichtet sind, um eine Unterbrechung der Zuführung der entsprechenden Paare von Drähten zu bewirken, wenn die gemessene Eingangsimpedanz (Zem) einen Wert aufweist, der sich von einem Bereich von vorbestimmten Werten unterscheidet.

5. Vorrichtung nach einem der vorhergehenden Ansprüche, die Steuerungsmittel (19) umfasst, die eingerichtet sind, um den Strombegrenzungspegel für jedes Paar von Drähten zu steuern.

6. Vorrichtung nach einem der vorhergehenden Ansprüche, wobei die Satellitenumsetzer eingerichtet sind, um ein Erkennungssignal zu erzeugen und es an die Vermittlungsstelle zu übertragen und wobei die Vermittlungsstelle eingerichtet ist, um das Erkennungssignal zu empfangen.

7. Vorrichtung nach Anspruch 6, wobei das Erkennungssignal das Maß des Eingangsstroms des Satellitenumsetzers ist und die Vermittlungsstelle Mittel umfasst, die eingerichtet sind, um eine Unterbrechung der Zuführung des Paars von entsprechenden Drähten zu bewirken, wenn die Differenz zwischen dem Eingangsstrom des Satellitenumsetzers und dem entsprechenden Ausgangsstrom der Vermittlungsstelle eine vorbestimmte Schwelle erreicht.

8. Vorrichtung nach Anspruch 6 oder 7, die Mittel umfasst, die eingerichtet sind, um den Eingangsstrom (lme) am Eingang (15) des Satellitenumsetzers (13) in eine Frequenz umzuwandeln, die in Abhängigkeit vom gemessenen Wert variiert, diese Frequenz beim Eingang (15) des entsprechenden Satellitenumsetzers (13) auf das gemessene Paar von Drähten (TPL) anzuwenden, diese Frequenz beim Ausgang des entsprechenden gesteuerten Umsetzers abzunehmen, und diese Frequenz zu verwenden, um sie mit einer lokalen Messung des Satellitenumsetzers (13) zu vergleichen.

9. Vorrichtung nach einem der vorhergehenden Ansprüche, wobei die Vermittlungsstelle eingerichtet ist, um eine Stromunterbrechung in einem der Paare von Drähten zu erzeugen und gleichzeitig die Zuführung in den anderen Paaren von Drähten aufrecht zu erhalten.

10. Vorrichtung nach einem der vorhergehenden Ansprüche, wobei die Vermittlungsstelle (1) zentrale Umsetzer umfasst, wobei jeder zentrale Umsetzer jeweils mit einem der Paare von Drähten verbunden ist.

11. Vorrichtung nach einem der vorhergehenden Ansprüche, die mit dem Satellitenumsetzer verbundene Mittel umfasst, die eingerichtet sind, um eine Stabilisierungsspannung Ust (Ust = Ua - (Iₘₐₓ x R_{L})) zu bestimmen, die auf den Satellitenumsetzer anzuwenden ist, wobei
Ua die Ausgangsspannung des zentralen Umsetzers ist,
Iₘₐₓ der erlaubte Höchststrom ist,
R_{L} der Leitungswiderstand des Paars von Drähten ist, der bestimmt ist durch R_{L} = (Ua - Uc)/lc, wobei Uc die Eingangsspannung des Satellitenumsetzers ist, wobei Ic der Leitungswiderstand zu einem gegebenen Zeitpunkt ist.

12. Vorrichtung nach Anspruch 10, wobei die zentralen Umsetzer einen Rahmen umfassen, wobei die Vorrichtung, wenn die Energiequelle eine Gleichspannungsquelle ist, die eine positive und eine negative Klemme umfasst, mit der Vermittlungsstelle verbundene Mittel umfasst, die eingerichtet sind, um:
- die Impedanz zwischen dem Rahmen der zentralen Umsetzer und einer der Klemmen der Energiequelle, insbesondere der positiven Klemme, zu bestimmen, und
- ein Signal zu erzeugen, wenn die Impedanz eine vorbestimmte Schwelle überschreitet.
